# EUROPEAN PATENT APPLICATION

(11) **EP 4 343 571 A1**
(43) Date of publication of application: **27.03.2024**
(21) Application number: 22204576.7
(22) Date of filing: 28.10.2022
(51) Int. Cl.: G06F 16/242

(54) **VOICE-BASED PERFORMANCE QUERY WITH NON-SEMANTIC DATABASES**

(30) Priority: 22.09.2022 US 202217950956
(71) Applicant: Hitachi Energy Ltd, 8050 Zürich (CH)
(72) Inventor: SAHA, Barun Kumar, 713212 West Bengal (IN); GORDON, Paul, Santa Clara, 95051 (US); GILLBRAND, Tore, Portola Valley, 94028 (US)
(74) Representative: Vossius & Partner Patentanwälte Rechtsanwälte mbB

(57) **Abstract**

The use of natural language to query a database (e.g., storing performance data for an industrial system) is hindered by the use of non-semantic names for database elements in databases. While these non-semantic names could be modified, this requires modifying the databases, as well as modifying the applications that utilize the databases. Accordingly, embodiments disclosed herein train and apply a text-to-SQL model that translates natural-language queries into Structured Query Language (SQL) queries that utilize semantic names for database elements. These SQL queries utilize database views that map the native names for database elements to their semantic names. In addition, domain-specific pre-processing may be performed on the inputs to the text-to-SQL model. Collectively, this improves the accuracy of the text-to-SQL translation, without having to modify the databases or applications, while also enabling voice-based natural-language queries.

## Description

### BACKGROUND

### Field of the Invention

The embodiments described herein are generally directed to database queries using natural language, and, more particularly, to natural-language queries of non-semantic databases (e.g., regarding the performance of a system).

### Description of the Related Art

An industrial system, such as a network management system (NMS), may use a relational database management system (RDBMS) to store operational and measurements data in a database. Such data may be retrieved from the database by executing a query on the database.

Frequently, the query is written in Structured Query Language (SQL), either by a user or an application. It would be beneficial, especially for users without software expertise, to be able to pose the query as a question in natural language, either through spoken or written text. This would obviate the need for the user to have to acquire expertise in a query language, such as SQL.

Recent advances in artificial intelligence (AI) allow the translation of natural-language text questions into SQL queries that can be executed on a database. However, this text-to-SQL translation assumes that the database utilizes semantic names for its database elements (e.g., tables and columns). Such an assumption is not always correct, especially for legacy databases that may have evolved over decades. While the database elements could be renamed from their original native names to semantic names, this may potentially break links with existing applications which utilize the native names. In other words, not only would the database need to be modified, but every application that queries the database may need to be modified.

In addition, there are many scenarios in which voice-based querying is required. For example, when field engineers are installing wireless routers at the top of poles and want to query the network status, they may not be able to feasibly or safely type text into their device. In this case, it would be beneficial if the field engineers can simply speak a natural-language query. However, when natural-language queries are derived from spoken text, the intervening speech-to-text translation process may incorrectly transcribe one or more domain-specific values or add other noise.

Therefore, there is a need to enable text-to-SQL translation for non-semantic databases, while denoising speech-to-text translation, to enable real-time voice-based querying (e.g., of performance in an industrial system).

### SUMMARY

Accordingly, systems, methods, and non-transitory computer-readable media are disclosed for natural-language querying of non-semantic databases.

In an embodiment, a method comprises using at least one hardware processor to: add a database view to a database, wherein the database view maps native names for database elements in the database to semantic names for the database elements; obtain a natural-language text input representing a natural-language query; apply a machine-learning text-to-SQL model to the natural-language text input to generate a Structured Query Language (SQL) query that comprises the semantic name for each database element referenced in the SQL query; and execute the SQL query on the database, using the database view to map the semantic name for each database element referenced in the SQL query to the native name for that database element. The database elements may comprise tables and columns within the tables. The natural-language query and the SQL query may comprise a request for a value of at least one performance parameter of a network.

The method may further comprise using the at least one hardware processor to: receive a natural-language text string; and normalize the natural-language text string to obtain the natural-language text input. Normalizing the natural-language text string may comprise: identifying a text transcription of a network address in the natural-language text string; and replacing the text transcription of the network address with a representation of the network address in a standard format. Normalizing the natural-language text string may comprise: identifying a text transcription of one or both of a date and time in the natural-language text string; and replacing the text transcription of the one or both of a date and time with a timestamp value representing the one or both of the date and time. Normalizing the natural-language text string may comprise: identifying a text transcription of a term, for an entity represented in the database, in the natural-language text string; and replacing the text transcription of the term with a standard term for the entity.

The natural-language text string may be received via an input of a graphical user interface, and the method may further comprise using the at least one hardware processor to: receive a result of executing the SQL query on the database; and display a representation of the result in the graphical user interface. The natural-language text string may be received from an external system, and the method may further comprise using the at least one hardware processor to: receive a result of executing the SQL query on the database; and return a representation of the result to the external system.

In an embodiment, a method comprises using at least one hardware processor to: generate a representation of a database view for a database, wherein the database view maps native names for database elements in the database to semantic names for the database elements; and train a machine-learning text-to-SQL model to generate a Structured Query Language (SQL) query, comprising the semantic name for each database element referenced in the SQL query, from a natural-language text input representing a natural-language query, using a training dataset that comprises natural-language text inputs labeled with SQL queries. The database elements may comprise tables and columns within the tables. One or more of the natural-language queries in the training dataset may comprise a request for a value of at least one performance parameter of a network.

The method may further comprise using the at least one hardware processor to generate the training dataset by: obtaining an existing dataset that comprises natural-language text inputs labeled with existing SQL queries that comprise the native names for each database element referenced in the existing SQL queries; identifying the semantic names for the native names in the existing SQL queries; and replacing the native names in the existing SQL queries with the identified semantic names to produce modified SQL queries, wherein the training dataset comprises the natural-language text inputs, from the existing dataset, labeled with the modified SQL queries. The method may further comprise using the at least one hardware processor to train an entity-extraction model to extract semantic names for database elements from natural-language questions, using another training dataset that comprises natural-language phrases labeled with semantic names. Generating the representation of the database view may comprise: applying the trained entity-extraction model to the natural-language text inputs in the existing dataset to extract the semantic names for the database elements; and associating the extracted semantic names with corresponding ones of the native names in the existing SQL queries to produce the database view.

The method may further comprise using the at least one hardware processor to: apply the representation of the database view to the database to add the database view to the database; and for each of one or more user-specified natural-language text inputs, apply the trained machine-learning text-to-SQL model to the user-specified natural-language text input to generate an SQL query, and execute the generated SQL query on the database using the database view. The method may further comprise using the at least one hardware processor to, for each of the one or more user-specified natural-language text inputs: receive a result of executing the generated SQL query on the database; and return the result to a user system. The method may further comprise using the at least one hardware processor to, for each of the one or more user-specified natural-language text inputs: receive a user-specified natural-language text string; and normalize the natural-language text string to obtain the user-specified natural-language text input. Normalizing the natural-language text string may comprise: identifying a text transcription for a particular item in the natural-language text string; and replacing the text transcription for the particular item with a standardized representation of the particular item.

It should be understood that any of the features in the methods above may be implemented individually or with any subset of the other features in any combination. Thus, to the extent that the appended claims would suggest particular dependencies between features, disclosed embodiments are not limited to these particular dependencies. Rather, any of the features described herein may be combined with any other feature described herein, or implemented without any one or more other features described herein, in any combination of features whatsoever. In addition, any of the methods, described above and elsewhere herein, may be embodied, individually or in any combination, in executable software modules of a processorbased system, such as a server, and/or in executable instructions stored in a non-transitory computer-readable medium.

### BRIEF DESCRIPTION OF THE DRAWINGS

The details of the present invention, both as to its structure and operation, may be gleaned in part by study of the accompanying drawings, in which like reference numerals refer to like parts, and in which:
FIG. 1 illustrates an example infrastructure, in which one or more of the processes described herein, may be implemented, according to an embodiment;
FIG. 2 illustrates an example processing system, by which one or more of the processes described herein, may be executed, according to an embodiment;
FIG. 3 illustrates a process for translating text to SQL, according to an embodiment;
FIG. 4 illustrates a process for training a text-to-SQL model and generating database view(s), according to an embodiment;
FIG. 5 illustrates an example implementation of a subprocess for mapping native names to semantic names, according to an embodiment;
FIG. 6 illustrates the architecture of a text-to-SQL model, according to an embodiment; and
FIG. 7 illustrates an example screen of a graphical user interface, according to an embodiment.

### DETAILED DESCRIPTION

In an embodiment, systems, methods, and non-transitory computer-readable media are disclosed for natural-language querying of non-semantic databases. After reading this description, it will become apparent to one skilled in the art how to implement the invention in various alternative embodiments and alternative applications. However, although various embodiments of the present invention will be described herein, it is understood that these embodiments are presented by way of example and illustration only, and not limitation. As such, this detailed description of various embodiments should not be construed to limit the scope or breadth of the present invention as set forth in the appended claims.

### 1. System Overview

### 1.1. Infrastructure

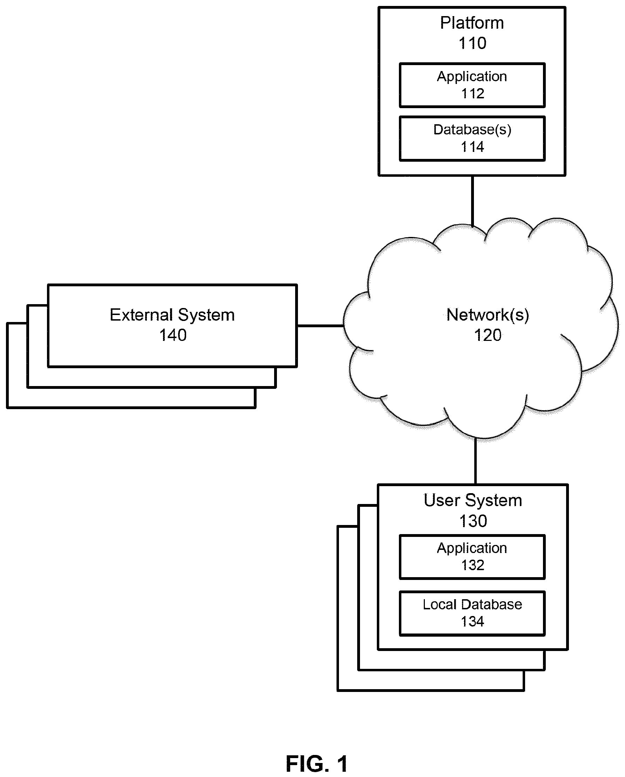

FIG. 1 illustrates an example infrastructure in which one or more of the disclosed processes may be implemented, according to an embodiment. The infrastructure may comprise a platform 110 (e.g., one or more servers) which hosts and/or executes one or more of the various functions, processes, methods, and/or software modules described herein. Platform 110 may comprise dedicated servers, or may instead be implemented in a computing cloud, in which the resources of one or more servers are dynamically and elastically allocated to multiple tenants based on demand. In either case, the servers may be collocated and/or geographically distributed. Platform 110 may also comprise or be communicatively connected to a server application 112 and/or one or more databases 114. In addition, platform 110 may be communicatively connected to one or more user systems 130 via one or more networks 120. Platform 110 may also be communicatively connected to one or more external systems 140 (e.g., other platforms, websites, etc.) via one or more networks 120.

Network(s) 120 may comprise the Internet, and platform 110 may communicate with user system(s) 130 through the Internet using standard transmission protocols, such as HyperText Transfer Protocol (HTTP), HTTP Secure (HTTPS), File Transfer Protocol (FTP), FTP Secure (FTPS), Secure Shell FTP (SFTP), and the like, as well as proprietary protocols. While platform 110 is illustrated as being connected to various systems through a single set of network(s) 120, it should be understood that platform 110 may be connected to the various systems via different sets of one or more networks. For example, platform 110 may be connected to a subset of user systems 130 and/or external systems 140 via the Internet, but may be connected to one or more other user systems 130 and/or external systems 140 via an intranet. Furthermore, while only a few user systems 130 and external systems 140, one server application 112, and one set of database(s) 114 are illustrated, it should be understood that the infrastructure may comprise any number of user systems, external systems, server applications, and databases.

User system(s) 130 may comprise any type or types of computing devices capable of wired and/or wireless communication, including without limitation, desktop computers, laptop computers, tablet computers, smart phones or other mobile phones, servers, game consoles, televisions, set-top boxes, electronic kiosks, point-of-sale terminals, and/or the like. However, it is contemplated that user system 130 would typically be a user's personal computer, work station, or mobile device (e.g., smartphone, field tablet computer, etc.). Each user system 130 may comprise or be communicatively connected to a client application 132 and/or one or more local databases 134. Client application 132 may communicate with server application 112 via network(s) 120.

Platform 110 may comprise web servers which host one or more websites and/or web services. In embodiments in which a website is provided, the website may comprise a graphical user interface, including, for example, one or more screens (e.g., webpages) generated in HyperText Markup Language (HTML) or other language. Platform 110 transmits or serves one or more screens of the graphical user interface in response to requests from user system(s) 130. In some embodiments, these screens may be served in the form of a wizard, in which case two or more screens may be served in a sequential manner, and one or more of the sequential screens may depend on an interaction of the user or user system 130 with one or more preceding screens. The requests to platform 110 and the responses from platform 110, including the screens of the graphical user interface, may both be communicated through network(s) 120, which may include the Internet, using standard communication protocols (e.g., HTTP, HTTPS, etc.). These screens (e.g., webpages) may comprise a combination of content and elements, such as text, images, videos, animations, references (e.g., hyperlinks), frames, inputs (e.g., textboxes, text areas, checkboxes, radio buttons, drop-down menus, buttons, forms, etc.), scripts (e.g., JavaScript), and the like, including elements comprising or derived from data stored in one or more databases (e.g., database(s) 114) that are locally and/or remotely accessible to platform 110. Platform 110 may also respond to other requests from user system(s) 130.

Platform 110 may comprise, be communicatively coupled with, or otherwise have access to one or more database(s) 114. For example, platform 110 may comprise one or more database servers (e.g., an RDBMS), which manage one or more databases 114. Server application 112 executing on platform 110, client application 132 executing on user system 130, and/or an application executing on an external system 140 may submit data (e.g., user data, form data, etc.) to be stored in database(s) 114, and/or request access to data stored in database(s) 114. Of particular relevance to the present application, data may be requested from database(s) 114 using a query in a suitable query language, such as SQL. Any suitable database may be utilized, including without limitation MySQL^{™}, Oracle^{™}, IBM^{™}, Microsoft SQL^{™}, Access^{™}, PostgreSQL^{™}, and the like, including cloud-based databases and proprietary databases. Data may be sent to platform 110, for instance, using the well-known POST request supported by HTTP, via FTP, and/or the like. This data, as well as other requests, may be handled, for example, by server-side web technology, such as a servlet or other software module (e.g., comprised in server application 112), executed by platform 110.

In embodiments in which a web service is provided, platform 110 may receive requests from external system(s) 140, and provide responses in eXtensible Markup Language (XML), JavaScript Object Notation (JSON), and/or any other suitable or desired format. In such embodiments, platform 110 may provide an application programming interface (API) which defines the manner in which user system(s) 130 and/or external system(s) 140 may interact with the web service. Thus, user system(s) 130 and/or external system(s) 140 (which may themselves be servers), can define their own user interfaces, and rely on the web service to implement or otherwise provide the backend processes, methods, functionality, storage, and/or the like, described herein. For example, in such an embodiment, an external system 140 may execute SQL queries on database(s) 114 via an API of platform 110. As another example, a client application 132, executing on one or more user system(s) 130, may interact with a server application 112 executing on platform 110 to execute one or more or a portion of one or more of the various functions, processes, methods, and/or software modules described herein.

Client application 132 may be "thin," in which case processing is primarily carried out server-side by server application 112 on platform 110. A basic example of a thin client application 132 is a browser application, which simply requests, receives, and renders webpages at user system(s) 130, while server application 112 on platform 110 is responsible for generating the webpages and managing database functions. Alternatively, the client application may be "thick," in which case processing is primarily carried out client-side by user system(s) 130. It should be understood that client application 132 may perform an amount of processing, relative to server application 112 on platform 110, at any point along this spectrum between "thin" and "thick," depending on the design goals of the particular implementation. In any case, the software described herein, which may wholly reside on either platform 110 (e.g., in which case server application 112 performs all processing) or user system(s) 130 (e.g., in which case client application 132 performs all processing) or be distributed between platform 110 and user system(s) 130 (e.g., in which case server application 112 and client application 132 both perform processing), can comprise one or more executable software modules comprising instructions that implement one or more of the processes, methods, or functions described herein.

### 1.2. Example Processing Device

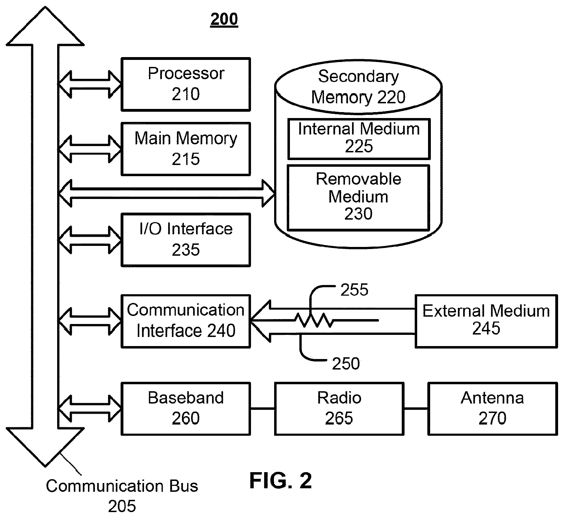

FIG. 2 is a block diagram illustrating an example wired or wireless system 200 that may be used in connection with various embodiments described herein. For example, system 200 may be used as or in conjunction with one or more of the functions, processes, or methods (e.g., to store and/or execute the software) described herein, and may represent components of platform 110, user system(s) 130, external system(s) 140, and/or other processing devices described herein. System 200 can be a server or any conventional personal computer, or any other processor-enabled device that is capable of wired or wireless data communication. Other computer systems and/or architectures may be also used, as will be clear to those skilled in the art.

System 200 preferably includes one or more processors 210. Processor(s) 210 may comprise a central processing unit (CPU). Additional processors may be provided, such as a graphics processing unit (GPU) (e.g., for training of any of the disclosed models, operation of or inference by any of the disclosed models, etc.), an auxiliary processor to manage input/output, an auxiliary processor to perform floating-point mathematical operations, a special-purpose microprocessor having an architecture suitable for fast execution of signal-processing algorithms (e.g., digital-signal processor), a slave processor subordinate to the main processing system (e.g., back-end processor), an additional microprocessor or controller for dual or multiple processor systems, and/or a coprocessor. Such auxiliary processors may be discrete processors or may be integrated with processor 210. Examples of processors which may be used with system 200 include, without limitation, any of the processors (e.g., Pentium^{™}, Core i7^{™}, Xeon^{™}, etc.) available from Intel Corporation of Santa Clara, California, any of the processors available from Advanced Micro Devices, Incorporated (AMD) of Santa Clara, California, any of the processors (e.g., A series, M series, etc.) available from Apple Inc. of Cupertino, any of the processors (e.g., Exynos^{™}) available from Samsung Electronics Co., Ltd., of Seoul, South Korea, any of the processors available from NXP Semiconductors N.V. of Eindhoven, Netherlands, and/or the like.

Processor 210 is preferably connected to a communication bus 205. Communication bus 205 may include a data channel for facilitating information transfer between storage and other peripheral components of system 200. Furthermore, communication bus 205 may provide a set of signals used for communication with processor 210, including a data bus, address bus, and/or control bus (not shown). Communication bus 205 may comprise any standard or non-standard bus architecture such as, for example, bus architectures compliant with industry standard architecture (ISA), extended industry standard architecture (EISA), Micro Channel Architecture (MCA), peripheral component interconnect (PCI) local bus, standards promulgated by the Institute of Electrical and Electronics Engineers (IEEE) including IEEE 488 general-purpose interface bus (GPIB), IEEE 696/S-100, and/or the like.

System 200 preferably includes a main memory 215 and may also include a secondary memory 220. Main memory 215 provides storage of instructions and data for programs executing on processor 210, such as any of the software discussed herein. It should be understood that programs stored in the memory and executed by processor 210 may be written and/or compiled according to any suitable language, including without limitation C/C++, Java, JavaScript, Perl, Visual Basic, .NET, and the like. Main memory 215 is typically semiconductor-based memory such as dynamic random access memory (DRAM) and/or static random access memory (SRAM). Other semiconductor-based memory types include, for example, synchronous dynamic random access memory (SDRAM), Rambus dynamic random access memory (RDRAM), ferroelectric random access memory (FRAM), and the like, including read only memory (ROM).

Secondary memory 220 is a non-transitory computer-readable medium having computer-executable code (e.g., any of the software disclosed herein) and/or other data stored thereon. The computer software or data stored on secondary memory 220 is read into main memory 215 for execution by processor 210. Secondary memory 220 may include, for example, semiconductor-based memory, such as programmable read-only memory (PROM), erasable programmable read-only memory (EPROM), electrically erasable read-only memory (EEPROM), and flash memory (block-oriented memory similar to EEPROM).

Secondary memory 220 may optionally include an internal medium 225 and/or a removable medium 230. Removable medium 230 is read from and/or written to in any well-known manner. Removable storage medium 230 may be, for example, a magnetic tape drive, a compact disc (CD) drive, a digital versatile disc (DVD) drive, other optical drive, a flash memory drive, and/or the like.

In alternative embodiments, secondary memory 220 may include other similar means for allowing computer programs or other data or instructions to be loaded into system 200. Such means may include, for example, a communication interface 240, which allows software and data to be transferred from external storage medium 245 to system 200. Examples of external storage medium 245 include an external hard disk drive, an external optical drive, an external magnetooptical drive, and/or the like.

As mentioned above, system 200 may include a communication interface 240. Communication interface 240 allows software and data to be transferred between system 200 and external devices (e.g. printers), networks, or other information sources. For example, computer software or executable code may be transferred to system 200 from a network server (e.g., platform 110) via communication interface 240. Examples of communication interface 240 include a builtin network adapter, network interface card (NIC), Personal Computer Memory Card International Association (PCMCIA) network card, card bus network adapter, wireless network adapter, Universal Serial Bus (USB) network adapter, modem, a wireless data card, a communications port, an infrared interface, an IEEE 1394 fire-wire, and any other device capable of interfacing system 200 with a network (e.g., network(s) 120) or another computing device. Communication interface 240 preferably implements industry-promulgated protocol standards, such as Ethernet IEEE 802 standards, Fiber Channel, digital subscriber line (DSL), asynchronous digital subscriber line (ADSL), frame relay, asynchronous transfer mode (ATM), integrated digital services network (ISDN), personal communications services (PCS), transmission control protocol/Internet protocol (TCP/IP), serial line Internet protocol/point to point protocol (SLIP/PPP), and so on, but may also implement customized or non-standard interface protocols as well.

Software and data transferred via communication interface 240 are generally in the form of electrical communication signals 255. These signals 255 may be provided to communication interface 240 via a communication channel 250. In an embodiment, communication channel 250 may be a wired or wireless network (e.g., network(s) 120), or any variety of other communication links. Communication channel 250 carries signals 255 and can be implemented using a variety of wired or wireless communication means including wire or cable, fiber optics, conventional phone line, cellular phone link, wireless data communication link, radio frequency ("RF") link, or infrared link, just to name a few.

Computer-executable code (e.g., computer programs, such as the disclosed software) is stored in main memory 215 and/or secondary memory 220. Computer-executable code can also be received via communication interface 240 and stored in main memory 215 and/or secondary memory 220. Such computer programs, when executed, enable system 200 to perform the various functions of the disclosed embodiments as described elsewhere herein.

In this description, the term "computer-readable medium" is used to refer to any non-transitory computer-readable storage media used to provide computer-executable code and/or other data to or within system 200. Examples of such media include main memory 215, secondary memory 220 (including internal memory 225 and/or removable medium 230), external storage medium 245, and any peripheral device communicatively coupled with communication interface 240 (including a network information server or other network device). These non-transitory computer-readable media are means for providing software and/or other data to system 200.

In an embodiment that is implemented using software, the software may be stored on a computer-readable medium and loaded into system 200 by way of removable medium 230, I/O interface 235, or communication interface 240. In such an embodiment, the software is loaded into system 200 in the form of electrical communication signals 255. The software, when executed by processor 210, preferably causes processor 210 to perform one or more of the processes and functions described elsewhere herein.

In an embodiment, I/O interface 235 provides an interface between one or more components of system 200 and one or more input and/or output devices. Example input devices include, without limitation, sensors, keyboards, touch screens or other touch-sensitive devices, cameras, biometric sensing devices, computer mice, trackballs, pen-based pointing devices, and/or the like. Examples of output devices include, without limitation, other processing devices, cathode ray tubes (CRTs), plasma displays, light-emitting diode (LED) displays, liquid crystal displays (LCDs), printers, vacuum fluorescent displays (VFDs), surface-conduction electron-emitter displays (SEDs), field emission displays (FEDs), and/or the like. In some cases, an input and output device may be combined, such as in the case of a touch panel display (e.g., in a smartphone, tablet, or other mobile device).

System 200 may also include optional wireless communication components that facilitate wireless communication over a voice network and/or a data network (e.g., in the case of user system 130). The wireless communication components comprise an antenna system 270, a radio system 265, and a baseband system 260. In system 200, radio frequency (RF) signals are transmitted and received over the air by antenna system 270 under the management of radio system 265.

In an embodiment, antenna system 270 may comprise one or more antennae and one or more multiplexors (not shown) that perform a switching function to provide antenna system 270 with transmit and receive signal paths. In the receive path, received RF signals can be coupled from a multiplexor to a low noise amplifier (not shown) that amplifies the received RF signal and sends the amplified signal to radio system 265.

In an alternative embodiment, radio system 265 may comprise one or more radios that are configured to communicate over various frequencies. In an embodiment, radio system 265 may combine a demodulator (not shown) and modulator (not shown) in one integrated circuit (IC). The demodulator and modulator can also be separate components. In the incoming path, the demodulator strips away the RF carrier signal leaving a baseband receive audio signal, which is sent from radio system 265 to baseband system 260.

If the received signal contains audio information, then baseband system 260 decodes the signal and converts it to an analog signal. Then the signal is amplified and sent to a speaker. Baseband system 260 also receives analog audio signals from a microphone. These analog audio signals are converted to digital signals and encoded by baseband system 260. Baseband system 260 also encodes the digital signals for transmission and generates a baseband transmit audio signal that is routed to the modulator portion of radio system 265. The modulator mixes the baseband transmit audio signal with an RF carrier signal, generating an RF transmit signal that is routed to antenna system 270 and may pass through a power amplifier (not shown). The power amplifier amplifies the RF transmit signal and routes it to antenna system 270, where the signal is switched to the antenna port for transmission.

Baseband system 260 is also communicatively coupled with processor(s) 210. Processor(s) 210 may have access to data storage areas 215 and 220. Processor(s) 210 are preferably configured to execute instructions (i.e., computer programs, such as the disclosed software) that can be stored in main memory 215 or secondary memory 220. Computer programs can also be received from baseband processor 260 and stored in main memory 210 or in secondary memory 220, or executed upon receipt. Such computer programs, when executed, can enable system 200 to perform the various functions of the disclosed embodiments.

### 2. Process Overview

Embodiments of processes for natural-language querying of non-semantic databases will now be described in detail. It should be understood that the described processes may be embodied in one or more software modules that are executed by one or more hardware processors (e.g., processor 210), for example, as a software application (e.g., server application 112, client application 132, and/or a distributed application comprising both server application 112 and client application 132), which may be executed wholly by processor(s) of platform 110, wholly by processor(s) of user system(s) 130, or may be distributed across platform 110 and user system(s) 130, such that some portions or modules of the software application are executed by platform 110 and other portions or modules of the software application are executed by user system(s) 130. The described processes may be implemented as instructions represented in source code, object code, and/or machine code. These instructions may be executed directly by hardware processor(s) 210, or alternatively, may be executed by a virtual machine operating between the object code and hardware processor(s) 210. In addition, the disclosed software may be built upon or interfaced with one or more existing systems.

Alternatively, the described processes may be implemented as a hardware component (e.g., general-purpose processor, integrated circuit (IC), application-specific integrated circuit (ASIC), digital signal processor (DSP), field-programmable gate array (FPGA) or other programmable logic device, discrete gate or transistor logic, etc.), combination of hardware components, or combination of hardware and software components. To clearly illustrate the interchangeability of hardware and software, various illustrative components, blocks, modules, circuits, and steps are described herein generally in terms of their functionality. Whether such functionality is implemented as hardware or software depends upon the particular application and design constraints imposed on the overall system. Skilled persons can implement the described functionality in varying ways for each particular application, but such implementation decisions should not be interpreted as causing a departure from the scope of the invention. In addition, the grouping of functions within a component, block, module, circuit, or step is for ease of description. Specific functions or steps can be moved from one component, block, module, circuit, or step to another without departing from the invention.

Furthermore, while the processes, described herein, are illustrated with a certain arrangement and ordering of subprocesses, each process may be implemented with fewer, more, or different subprocesses and a different arrangement and/or ordering of subprocesses. In addition, it should be understood that any subprocess, which does not depend on the completion of another subprocess, may be executed before, after, or in parallel with that other independent subprocess, even if the subprocesses are described or illustrated in a particular order.

### 2.1. Operation

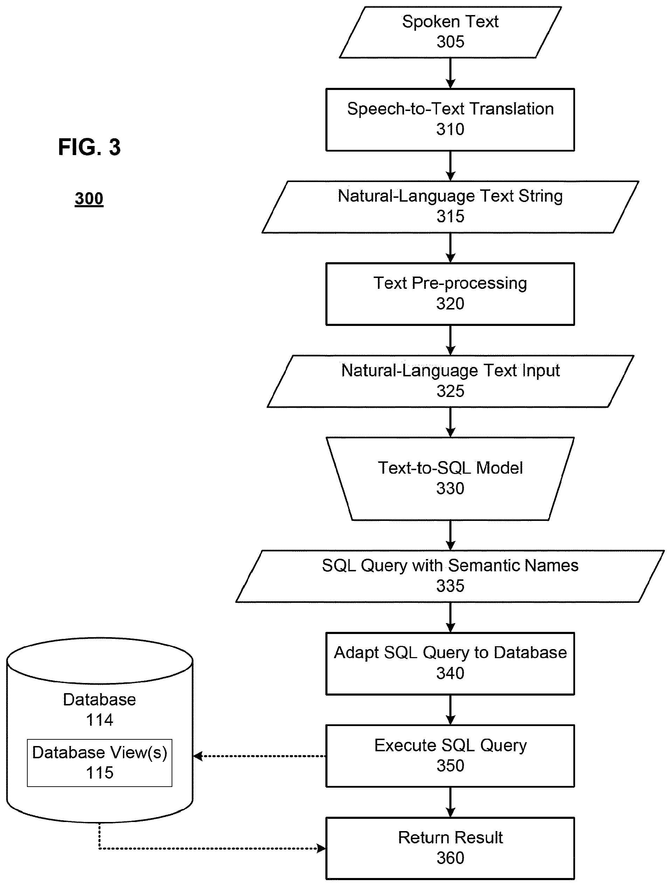

FIG. 3 illustrates a process 300 for translating text to SQL, according to an embodiment. Process 300 assumes that the translation begins with spoken text 305, which is translated from speech to text in subprocess 310, to produce natural-language text string 315. However, in an alternative example, in which the natural-language question is typed, rather than spoken, subprocess 310 may be omitted. In other words, in this case, process 300 may begin with natural-language text string 315.

In subprocess 310, spoken text 305 is received and translated to natural-language text string 315. Spoken text 305 may be received via an audio interface (e.g., one or more microphones) of user system 130 in real time (i.e., as the text is spoken by a user). For example, a user (e.g., field engineer) may initiate a recording function of client application 132 on user system 130. The recording function may be initiated via an input in a graphical user interface of client application 132, via a hardware button on user system 130, in response to a spoken command that is recognized by a background function executing on user system 130, automatically whenever speech is detected by a background function executing on user system 130, and/or the like. Subprocess 310 may utilize any suitable technique for speech-to-text translation, and may be performed either as a module of client application 132 on user system 130, as a module of server application 112 on platform 110 (e.g., as a cloud-based service), or as a module of an edge device between user system 130 and platform 110. Natural-language text string 315 may consist of a text transcription of spoken text 305.

In subprocess 320, natural-language text string 315 may be pre-processed to produce a natural-language text input 325. In particular, natural-language text string 315 may be normalized, according to one or more normalization functions, to obtain natural-language text input 325. The particular normalization functions that are utilized may depend on the particular domain in which process 300 is utilized. For example, certain domains have entities whose textual representations differ significantly from non-technical text. Such domain-specific entities include network addresses, date-time values, certain terms, and/or the like. A generic speech-to-text translation function in subprocess 310 may not perform well when transcribing these domain-specific entities, which may ultimately result in incorrect SQL queries. On the other hand, building a domain-specific speech-to-text translation function from scratch would require significant effort. Thus, one or more normalization functions may be used to correct the text transcriptions of these domain-specific entities or any other particular item. It should be understood that subprocess 320 may utilize one of the disclosed normalization functions, all of the disclosed normalization functions, none of the disclosed normalization functions, or any subset of the disclosed normalization functions in any combination, as well as other normalization functions that are not specifically disclosed herein.

In domains which utilize network addresses, subprocess 320 may comprise a normalization function that identifies a text transcription of a network address in natural-language text string 315, and replaces the text transcription of the network address with a representation of the network address in a standard format. A network address may comprise an Internet Protocol (IP) address, a Media Access Control (MAC) address, and/or other identifier. For example, spoken text 305 may comprise the question "what is the current latency of gateway 10.0.0.1?," as asked by a user. The corresponding natural-language text string 315, transcribed by subprocess 310, may be "what is the current latency of gateway 10.0 dot 0.1." Since an IP address would not generally be represented in this non-standard format in database 114, the resulting SQL query would not be able to return a correct result. Thus, the normalization function of subprocess 320 may detect this incorrect format and convert it into the standard format. The incorrect format may be detected using pattern matching with a regular expression, such as: r'\b(\d+\.\d+)[\s]^{∗}(\d+\.\d+)\b'. In this case, the regular expression groups may be concatenated to obtain the IP address in the correct format. It should be understood that the normalization function may attempt to match a plurality of different regular expressions to identify and correct a network address in a plurality of different possible incorrect formats.

In domains which utilize dates and times, subprocess 320 may comprise a normalization function that identifies a text transcription of one or both of a date and time in natural-language text string 315, and replaces the text transcription of the one or both of a date and time with a timestamp value that represents the one or both of the date and time. Database 114 will generally store date-time values as timestamps representing epochs. For example, the Unix epoch represents a date-time value as the number of seconds since 00:00:00 Coordinated Universal Time (UTC), January 1, 1970. While this is convenient for computers, humans do not naturally speak in terms of epochs. Therefore, the normalization function of subprocess 320 may detect date-time values in different formats, using regular expressions for pattern matching, and convert any such date-time values into a timestamp value representing a standard epoch (e.g., the Unix epoch).

Some domains may utilize terms for entities that are generally represented in a database by a categorical or standard term. Thus, subprocess 320 may comprise a normalization function that identifies a text transcription of a term, for an entity represented in database 114, in natural-language text string 315, and replaces the text transcription of the term with a standard term for the entity. These terms may be identified using keyword searching (e.g., from a list of terms) or regular expressions (e.g., to detect a plurality of possible grammatical variations of each term) for pattern matching. As an example, in the domain of wireless mesh networks, database elements may utilize terms such as "Node" and "Gateway" to indicate device types. However, natural-language text string 315 may comprise the request to "show me the IP addresses of all gateways." In this case, the normalization function may identify the term "gateways" and replace it with the term "Gateway" to obtain the natural-language text input 325 of "show me the IP addresses of all Gateway." In an embodiment, one or more, including potentially all, plural nouns in natural-language text string 315 may be replaced with the corresponding singular nouns.

A machine-learning text-to-SQL model 330 may be applied to natural-language text input 325, output by the text pre-processing in subprocess 320, to generate an SQL query 335. SQL query 335 comprises semantic names, as opposed to the native names, for each database element (e.g., table, column within a table, etc.) referenced in SQL query 335. As used herein, the term "semantic" refers to a name that describes an entity in terms of its meaning, whereas the term "native" refers to a name that is used for the actual database element representing the entity in database 114. For example, a native name may be "num_neighbor," and the corresponding semantic name may be "neighbor count" or "neighbor_count." It is possible that, in some instances, the semantic name and the native name are identical. However, in many cases, the native name is chosen for convenience and will not convey the proper meaning of an entity represented by a database element or may do so in a manner that is difficult to understand.

In subprocess 340, SQL query 335 may be adapted to the relevant database, if necessary. In particular, different database types (e.g., SQLite^{™}, MySQL^{™}, Oracle^{™}, etc.) may have different query syntaxes. For example, if the results of the query should be limited to a single row, SQL query 335 should specify "LIMIT 1" for a query of a MySQL^{™} database, but "FETCH FIRST 1 ROWS ONLY" for a query of an Oracle^{™} database. To perform this adaptation, a list of known patterns may be associated with each database type or database 114 and used in pattern matching against SQL query 335 to replace sections of SQL query 335, add sections to SQL query 335, delete sections from SQL query 335, and/or otherwise modify SQL query 335 to conform to the query syntax of the relevant database 114. In embodiments which only support a single database type or in which the supported database types all utilize the same query syntax, subprocess 340 may be omitted.

In subprocess 350, SQL query 335 (e.g., as adapted by subprocess 340 in embodiments which include subprocess 340, or as output by subprocess 330 in embodiments which do not include subprocess 340) may be executed on database 114. For example, SQL query 335 may be submitted to database 114 via an RDBMS for execution. Again, SQL query 335 may utilize the semantic names for database elements in database 114. Database 114 may comprise one or more database views 115. A database view 115 is a logical, virtual, or proxy table that does not actually exist in database 114. There may be a database view 115 for each actual table in database 114, or at least each table in database 114 that will be the subject of natural-language queries. Each database view 115 maps the native names for database elements (e.g., columns) in a table of database 114 to the corresponding semantic names for those database elements. In addition, a database view 115 may be named using a semantic name that corresponds to the native name of the actual table in database 114 to which the database view 115 corresponds. Thus, during execution of SQL query 335, which may act upon a database view 115 for the relevant table, each semantic name in SQL query 335 is mapped to the corresponding native name in database 114, so that the query can be performed against the native names in database 114. For example, the semantic name for each referenced table may be mapped to a particular database view 115, and the semantic name for each referenced column in each referenced table may be mapped to the native name for that column in database 114. Following execution of SQL query 335, the RDBMS for database 114 will return a result of executing SQL query 335 on database 114.

In subprocess 360, the result of executing SQL query 335 may be returned in response to spoken text 305 or natural-language text string 315. For example, subprocess 360 may display a representation of the result in a graphical user interface on user system 130 (e.g., generated by client application 132, or generated by server application 112 and rendered by client application 132). Thus, in an embodiment, a user may speak a natural-language query (e.g., as a question, request, or statement) into his or her user system 130, and user system 130 may display the result to the user. Alternatively, a user may type a natural-language query into an input of a graphical user interface displayed on user system 130, and user system 130 may display the result to the user in the graphical user interface.

It should be understood that process 300 may be performed entirely by server application 112, in which case spoken text 305 may be recorded and transmitted to server application 112, which may implement subprocesses 320, 330, 340, and 350, and transmit the result in subprocess 360. Alternatively, process 300 may be performed entirely by client application 132 on user system 130. As yet another alternative, process 300 may be performed partially by client application 132 and partially by server application 112. For example, client application 132 may implement subprocess 310 and transmit natural-language text string 315 to server application 112 to implement the remaining subprocesses, or client application may implement subprocesses 310 and 320 and transmit natural-language text input 325 to server application 112 to implement the remaining subprocesses.

### 2.2. Training of Text-to-SQL Model & Generation of Database Views

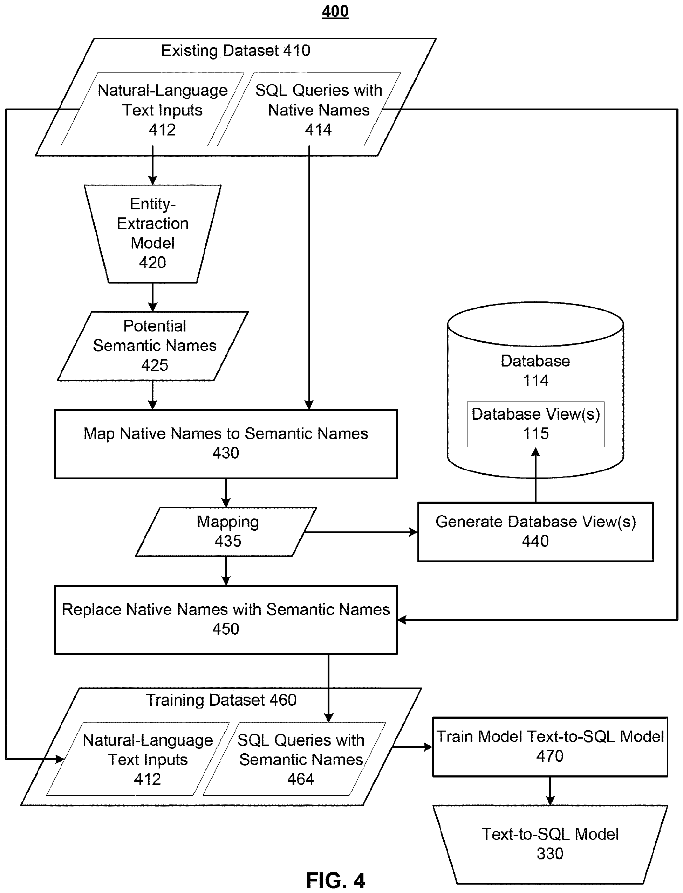

FIG. 4 illustrates a process 400 for training text-to-SQL model 330 and generating database view(s) 115, according to an embodiment. Process 400 may start by obtaining an existing dataset 410 that comprises natural-language text inputs 412, labeled with existing SQL queries 414 that comprise the native names for each referenced database element. It should be understood that each existing SQL query 414 represents a ground-truth SQL query that corresponds to the natural-language text input 412 with which it is associated. Existing dataset 410 may be a public dataset or may be acquired by any other means.

An entity-extraction model 420 is applied to natural-language text inputs 412 in existing dataset 410 to extract potential semantic names 425 for data elements represented in natural-language text inputs 412. Entity-extraction model 420 may also output a confidence value for each potential semantic name 425. Entity-extraction model 420 may have been previously trained to extract semantic names for database elements from natural-language questions using a training dataset that comprises natural-language phrases labeled with ground-truth semantic names represented by those natural-language phrases.

Entity-extraction model 420 may comprise a discriminative undirected probabilistic graphical model, such as conditional random fields (CRFs), that accounts for context. In a particular implementation, Rasa^{™} was used to train entity-extraction model 420. Rasa^{™} is opensource natural language understanding (NLU) software for training an AI model. In this implementation, entity-extraction model 420 comprised a Dual Intent and Entity Transformer (DIET), as described in Bunk et al., "DIET: Lightweight Language Understanding for Dialogue Systems," Computing Research Repository (CoRR), abs/2004.09936, doi: 10.48550/ARXIV.2004.09936 (2020), which is hereby incorporated herein by reference as if set forth in full. DIET implements a natural language processing (NLP) architecture that uses an encoder-decoder model with self-attention layers. The encoder comprises a stack of encoder layers, with each encoder layer including a self-attention layer and a fully connected, two-layer feed-forward network. In particular, DIET is a multi-task transformer that classifies intents and recognizes entities. In an embodiment, the output of DIET is input into a CRF layer to produce potential semantic names 425.

Subprocess 430 may map the native names, used in existing SQL queries 414, to semantic names from potential semantic names 425, to produce a mapping 435 between native names and semantic names. Each potential semantic name 425 may be mapped to a native name in existing SQL queries 414 that corresponds to the same entity (i.e., represent the same database element). In some cases, a single native name may be mapped to a plurality of different potential semantic names.

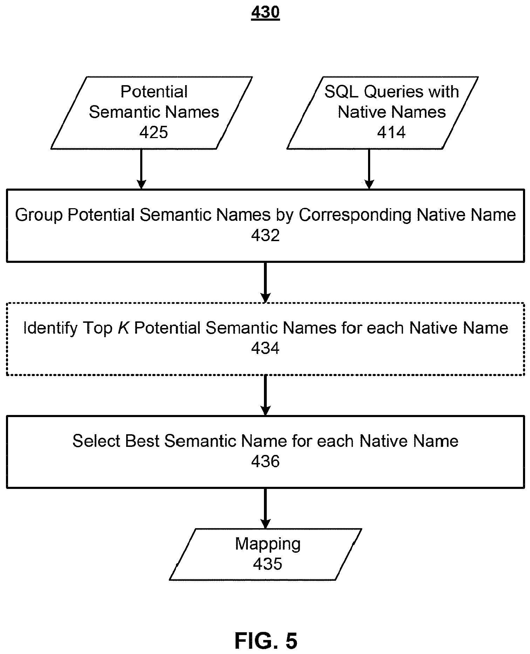

FIG. 5 illustrates an example implementation of subprocess 430, according to an embodiment. Initially, in subprocess 432, potential semantic names 425 are grouped by their corresponding native names in SQL queries 414. The table below illustrates some examples of mappings extracted from natural-language text inputs 412 and their corresponding SQL queries 414, with extracted potential semantic column names indicated in brackets and their mapped native column names, if any, indicated using the same number of brackets:

| # | Natural-Language Text Input | SQL Query |
|---|---|---|
| 1 | show me the [neighbors count] for all devices at [[timestamp]] 1629356400 together with [[[IDs]]] | select [[[id]]], [num neighbor] from t_cell where [[start_time]] = 1629356400 |
| 2 | show me [device id], [[neighbors count]] for all devices at [[[timestamp]]] 1629356400 | select [id], [[num_neighbor]] from t cell where [[[start time]]] = 1629356400 |
| 3 | show me the [traffic transmitted] [[data using]] 5 giga hertz by node id 12345 | select [tx_rate1] from t cell where id = 12345 |

This produces the following table of potential mappings, grouped by native name and depicted with their respective confidence values, output by entity-extraction model 420:

| # | Native Column Name | Semantic Column Name | Confidence Value |
|---|---|---|---|
| 1 | t_cell.id | IDs | 0.97 |
| 2 | t cell.id | device id | 0.68 |
| 2 | t_cell.num_neighbor | neighbors count | 0.48 |
| 1 | t_cell.num_neighbor | neighbors count | 0.35 |
| 1 | t_cell.start_time | timestamp | 0.99 |
| 2 | t_cell.start_time | timestamp | 0.99 |
| 3 | t_cell.tx_rate1 | traffic transmitted | 0.67 |

In subprocess 434, the top *K* potential semantic names are identified for each native name. *K* may be set to any suitable number, such as ten, five, three, or the like. The potential semantic names may be ranked according to a parameter, such as the confidence value associated with each potential semantic name and/or the number of words in each potential semantic name. For example, semantic names having higher confidence values and/or fewer words may be ranked higher than semantic names with lower confidence values and/or more words. It should be understood that these are simply examples, and that other parameters or combinations of parameters may be used to rank the potential semantic names. Alternatively or additionally, subprocess 434 could exclude all potential semantic names with a confidence value below a predefined threshold, and/or could exclude any potential semantic names that have more than a maximum number of words (or only if there are potential semantic names for the same native name with fewer than the maximum number of words). The maximum number of words should be a small, positive integer, such as one, two, or three. In general, the use of too many words (e.g., more than three) can lead to ambiguity when comparing the names of database elements, and therefore, semantic names with fewer words may be preferred over semantic names with more words. It should be understood that, for some native names, there may be less than *K* potential semantic names. It should also be understood that potential semantic names that are the same for a given native name may be collapsed into a single potential semantic name. For example, the native column name "num neighbor" is associated with two instances of the same potential semantic column name "neighbors count," and the native column name "start_time" is associated with two instances of the same potential semantic column name "timestamp." However, the native column name "id" is associated with different potential semantic column names "IDs" and "device id".

In subprocess 436, a single best semantic name is selected, from the top *K* potential semantic names, for each native name, to produce mapping 435. In cases in which there is only a single potential semantic name for a given native name, that single potential semantic name may be automatically (e.g., without user intervention), semi-automatically (e.g., upon user confirmation), or manually (e.g., upon user selection) selected and mapped to that native name in mapping 435. For example, the semantic column name "neighbors count" may be selected for the native column name "num_neighbor", and the semantic column name "traffic transmitted" may be selected for the native column name "tx_rate1". In a semi-automatic or manual embodiment, an administrator may have the option to enter a different semantic name to be used for a native name, instead of the semantic name provided in potential semantic names 425.

In cases in which there is a plurality of potential semantic names for a given native name, a single potential semantic name may be automatically, semi-automatically, or manually selected using any technique. In an automatic embodiment, the semantic name with the highest rank may be selected. Using the above example, subprocess 436 may select "IDs" as the semantic column name for the native column name "id", since it has a higher confidence value than "device id" and/or since it has fewer words than "device id". In a semi-automatic embodiment, the semantic name with the highest rank may be suggested in a graphical user interface, and an administrator may have the option to either select the suggested semantic name, select any other one of the top *K* potential semantic names, or input a new semantic name via the graphical user interface. For example, the graphical user interface may suggest "IDs" as the semantic column name for the native column name "id", but the administrator may select "device id" instead. In a manual embodiment, a user may review the top *K* potential semantic names, ordered by rank, in a graphical user interface, and either select one or input a new semantic name via the graphical user interface.

In an alternative embodiment, subprocess 434 may be omitted, and, in subprocess 436, a single semantic name may be selected automatically, semi-automatically, or manually from all available potential semantic names 425 for a given native name, instead of just the top *K* potential semantic names. In the automatic or semi-automatic cases, the semantic name with the highest rank (e.g., in terms of confidence value and/or number of words) may be selected or suggested. In the manual case, the potential semantic names may be listed for selection in order of rank, with the potential semantic name having the highest rank listed first and the potential semantic name having the lowest rank listed last.

In an embodiment, if necessary, an administrator may manually add additional mappings to mapping 435. For example, entity-extraction model 420 may not extract semantic names for all database elements that could potentially be queried. In this case, an administrator may utilize a graphical user interface to input semantic names into mapping 435 for the native names of any database elements that have not yet been paired with a semantic name. In general, it is preferable for each database view 115 for a given database table to have a semantic name for every column in the database table.

In an alternative embodiment, mapping 435 could be generated entirely manually. For example, an administrator may review descriptions of the relevant database elements and manually derive semantic names for those database elements, to produce a mapping 435 between the semantic names and native names of the database elements.

In subprocess 440, one or more database views 115 may be generated from mapping 435. One database view 115 may be generated for each database table that is implicated by existing dataset 410. Using the above example, a database view 115 may be created for the "t_cell" table. Each database view 115 represents relevant database elements from mapping 435 in a format that can be added to database 114. For example, each database view 115 for a given table maps native names for columns in that table to semantic names for those columns. In addition, each database view 115 for a given table may be named using the semantic name that is mapped to the native name for that table. Optionally, additional logical columns may be added to one or more database views 115 to handle domain-specific queries. The generated database view(s) 115 may be added to database 114, such that the mapped database elements may be queried using the semantic names.

One example of a representation of a database view 115 that can be added to database 114 is provided below:

```
   CREATE VIEW gateways (
       timestamp,
       id,
       ip_address,
       downstream_throughput,
       upstream_throughput,
       latency
   ) AS
       SELECT
          START_TIME,
          ID,
          IP,
          DOWN T FROM B,
          UP_T_TO_B,
          AVG_LAT_FROM_G
       FROM t_Gateway_Specific_Data
```

wherein "t_Gateway_Specific_Data" is the native name of the actual database table, and "gateways" is the semantic name of that database table, and consequently, also the name of database view 115. In addition, "timestamp", "id", "ip_address", "downstream_throughput", "upstream_throughput", and "latency" are the semantic names for the native names "START_TIME", "ID", "IP", "DOWN_T_FROM_B", "UP_T_TO_B", and "AVG_LAT_FROM_G", respectively. Notably, semantic names having two or more words may use underscores, instead of spaces between the words, in order to comply with naming requirements in SQL. However, the semantic names are more descriptive of the table and columns, easier for a layperson to understand, and more likely to be used in natural language than the native names.

In subprocess 450, mapping 435 may also be used to generate SQL queries 464 with semantic names from existing SQL queries 414 with native names. In particular, subprocess 450 may process each existing SQL query 414 to replace each instance of a native name in mapping 435 with the mapped semantic name in mapping 435, to produce a corresponding modified SQL query 464 with the semantic names. It should be understood that, in all other respects, modified SQL queries 464 may be identical to existing SQL queries 414. The resulting modified SQL queries 464 with semantic names, instead of the native names, may be used as the labels for natural-language text inputs 412 in a new training dataset 460. In other words, existing dataset 410 is modified such that each natural-language text input 412 is labeled with an SQL query 464 having semantic names for database elements, instead of the corresponding SQL query 414 having native names for the database elements.

In subprocess 470, text-to-SQL model 330 is trained to generate SQL queries 335 with semantic names from natural-language text inputs 325, using training dataset 460. As discussed above, training dataset 460 comprises natural-language text inputs 412, labeled with SQL queries 464 with semantic names. Training dataset 460 should incorporate the schema of database 114. Once trained, text-to-SQL model 330 may be deployed for use in process 300.

### 2.3. Text-to-SQL Model

Text-to-SQL model 330 may be a machine-learning model that is trained via supervised learning. In an embodiment, text-to-SQL model 330 comprises a deep-learning neural network, such as a Recurrent Neural Network (RNN). In particular, the RNN may be a Sequence to Sequence (seq2seq) model, such as the Semi-Autoregressive Bottom-Up Semantic Parsing (SmBoP) model, described in Rubin et al., "SmBoP: Semi-autoregressive Bottom-up Semantic Parsing," in Proceedings of the 5th Workshop on Structured Prediction for NLP, Association for Computational Logistics, pp. 12-21 (Aug. 2021), which is hereby incorporated herein by reference as if set forth in full.

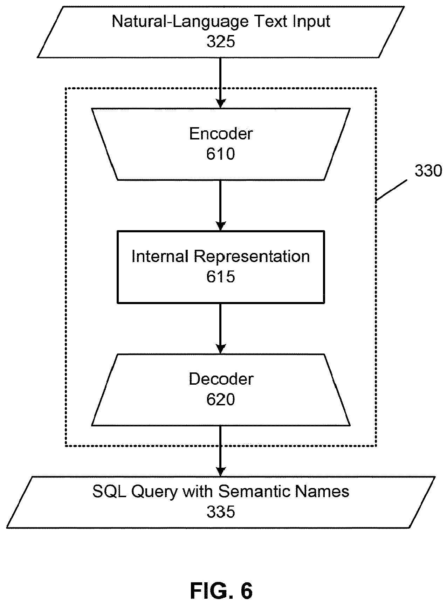

FIG. 6 illustrates the architecture of text-to-SQL model 330, according to an embodiment which utilizes a seq2seq model. The objective of a text-to-SQL translation task is to map natural-language text into an SQL query. For this purpose, a seq2seq model comprises an encoder 610 and a decoder 620. Encoder 610 encodes natural-language text input 325 into an internal representation 615. Decoder 620 decodes internal representation 615 into SQL query 335 with semantic names. It should be understood that internal representation 615 essentially encodes the meaning of natural-language text input 325, for example, in internal state vectors.

Encoder 610 may comprise the Relation-Aware Transformer (RAT-SQL), as described in Wang et al., RAT-SQL: Relation-aware Schema Encoding and Linking for Text-to-SQL Parsers," in Proceedings of the 58th Annual Meeting of the Association for Computational Linguistics, pp. 7567-7578 (2020), which is hereby incorporated herein by reference as if set forth in full, in combination with GraPPa, as described in Yu et al., "GraPPa: Grammar-Augmented Pre-Training for Table Semantic Parsing," in International Conference on Learning Representations (2021), which is hereby incorporated herein by reference as if set forth in full. RAT-SQL uses transformers, as described in Vaswani et al., "Attention Is All You Need," in Advances in Neural Information Processing Systems, pp. 5998-6008 (2017), which is hereby incorporated herein by reference as if set forth in full, to jointly encode a natural-language query, the related database columns, and the schema of the underlying database 114. GraPPa provides a mechanism for grammar-based semantic parsing for pre-training.

### 3. Example Graphical User Interface

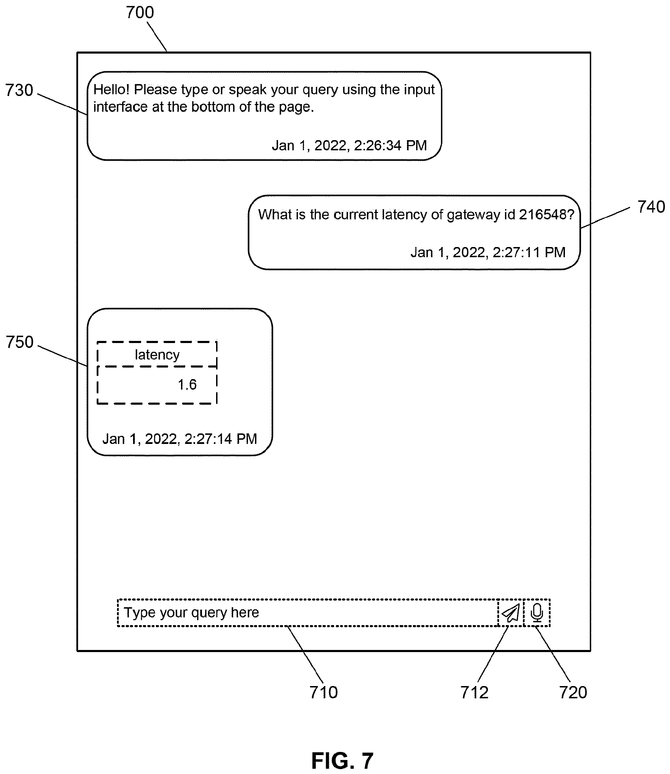

In an embodiment, a graphical user interface may be provided by server application 112 or client application 132 to access the functionality of process 300. FIG. 7 illustrates an example screen 700 of a graphical user interface, according to an embodiment. Screen 700 may comprise an input 710 (e.g., textbox) for typing a natural-language text string 315, as well as an input 712 for submitting the typed natural-language text string 315. Additionally or alternatively, screen 700 may comprise an input 720 for inputting spoken text 305 via an audio interface (e.g., microphone) of user system 130. In a preferred embodiment, screen 700 comprises all of inputs 710, 712, and 720. Screen 700 may also include a word bubble 730 comprising instructions for entering natural-language text string 315 and/or spoken text 305.

A user may type a natural-language text string 315 into input 710, and then select input 712 to submit natural-language text string 315 to the functionality implementing process 300 (e.g., starting from subprocess 320). Alternatively, a user may select input 720, and then speak a natural-language query into the audio interface of user system 130. The natural-language query may be recorded as spoken text 305 and submitted to the functionality implementing process 300 (e.g., starting from subprocess 310). It should be understood that the typing of natural-language text string 315 into input 710 and the selection of input 712 and/or 720 may be performed via an input of user system 130, such as a touch-panel display (e.g., of a smartphone or tablet computer).

In an additional or alternative embodiment, a wake-word-detection model may operate continuously in the background to listen to ambient sounds, captured by the audio interface of user system 130, in order to detect a "wake" phrase of one or more words, similar to "Ok Google" or "Hey Alexa." If the wake-word-detection model detects the wake phrase, the functionality of process 300 may be responsively activated. The graphical user interface may provide a settings screen which enables the user to train the wake-word-detection model (e.g., using machine learning) to detect custom, user-specified wake phrases and/or improve detection of the wake phrase in the user's voice. The wake-word-detection model may be based on convolutional neural network (CNN) transformers, such as those described in Wang et al., "Wake Word Detection with Streaming Transformers," 2021 IEEE International Conference on Acoustics, Speech and Signal Processing (ICASSP), pp. 5864-5868, which is hereby incorporated herein by reference as if set forth in full, or any other suitable architecture. Such a user interface provides entirely hands-free, voice-enabled operation that is convenient for field engineers working in challenging environments. It should be understood that, in this embodiment, screen 700 may omit inputs (e.g., no input 710, 712, or 720). Alternatively, the wake-word detection may be used in addition to having inputs 710, 712, and/or 720.

Regardless of how the natural-language query is input, the corresponding natural-language text string 315 (either as entered into input 710 or translated by subprocess 310) may be displayed in a word bubble 740 on screen 700, along with the date and time at which the natural-language query was submitted. This provides a timestamped record of the natural-language query for the user. In addition, the functionality implementing process 300 will pre-process natural-language text string 315 into natural-language text input 325 in subprocess 320, translate natural-language text input 325 into SQL query 335 with semantic names using text-to-SQL model 330, adapt SQL query 335 in subprocess 340 if necessary, execute SQL query 335 on database 114 using database view(s) 115 in subprocess 350, and return the result of SQL query 335 in subprocess 360.

The result of SQL query 335 may be displayed in a word bubble 750 on screen 700, below the word bubble 740 in which the corresponding natural-language text string 315 is displayed. Word bubble 750 may include the date and time at which the result of SQL query 335 was returned, such that the relevant time of the result is easily ascertainable. In the illustrated example, natural-language text string 315 consists of "What is the latency of gateway id 216548?". In this example, SQL query 335 may consist of:

```
   SELECT gateways. latency
   FROM gateways
   WHERE
       gateways.id = '216548'
       AND
       gateways.timestamp = (SELECT MAX(gateways.timestamp) FROM gateways)
```

wherein "gateways" is the name assigned to database view 115 for the relevant table (e.g., "gateways" being the semantic name mapped to the native name for the relevant table), and "id" and "timestamp" represent semantic column names that are mapped to native column names in database view 115. As illustrated in word bubble 750, the result of SQL query 335 is a "latency" of "1.6". In a particular implementation, results were returned in about 2-3 seconds with an accuracy of up to 92% by text-to-SQL model 330.

### 4. Example Embodiment

In an embodiment, a text-to-SQL model 330 is trained to translate natural-language text inputs 325 into SQL queries 335 that utilize semantic names for database elements in database 114. Text-to-SQL model 330 may be trained using a training dataset 460 comprising natural-language text inputs 412 that have been labeled with SQL queries 464 with semantic names. SQL queries 464 may be generated from an existing dataset 410 by mapping semantic names (e.g., output by entity-extraction model 420) to native names, and replacing the native names in existing SQL queries 414 with their mapped semantic names. In an embodiment, natural-language text strings 315 are pre-processed into natural-language text inputs 325, prior to application of text-to-SQL model 330, to normalize the input to text-to-SQL model 330 in a manner that is specific to the particular domain and reduce or eliminate noise. In addition, database view(s) 115 are generated and added to database 114 to map semantic names to native names of the database elements during execution of SQL queries 335.

The combination of text-to-SQL model 330 and database view(s) 115 enable semantic names to be utilized for SQL queries 335. The use of semantic names, instead of native names, in SQL queries 335 improves the performance of the translations output by text-to-SQL model 330 (e.g., up to 92% accuracy). Furthermore, this allows database 114 to continue using legacy names for database elements, which means that database 114 and legacy applications that utilize database 114 do not have to be modified in order to realize the improved translation performance provided by text-to-SQL model 330.

In an embodiment, database 114 may store performance data for an industrial system, such as a network (e.g., mesh network). Thus, the natural-language queries (e.g., either via spoken text 305 or natural-language text strings 315) may represent queries regarding the performance of the industrial system. The ability to use natural-language queries enables this performance data to be acquired quickly and naturally, allowing engineers to easily identify problems in the industrial system and reducing troubleshooting times. In addition, the use of speech-to-text translation (e.g., subprocess 310) enables such performance queries to be safely performed in the field, for example, without requiring the use of both hands by a field engineer.

Embodiment 1: A method comprising using at least one hardware processor to: add a database view to a database, wherein the database view maps native names for database elements in the database to semantic names for the database elements; obtain a natural-language text input representing a natural-language query; apply a machine-learning text-to-SQL model to the natural-language text input to generate a Structured Query Language (SQL) query that comprises the semantic name for each database element referenced in the SQL query; and execute the SQL query on the database, using the database view to map the semantic name for each database element referenced in the SQL query to the native name for that database element.

Embodiment 2: The method of Embodiment 1, wherein the database elements comprise tables and columns within the tables.

Embodiment 3: The method of any preceding embodiment, further comprising using the at least one hardware processor to: receive a natural-language text string; and normalize the natural-language text string to obtain the natural-language text input.

Embodiment 4: The method of Embodiment 3, wherein normalizing the natural-language text string comprises: identifying a text transcription of a network address in the natural-language text string; and replacing the text transcription of the network address with a representation of the network address in a standard format.

Embodiment 5: The method of either Embodiment 3 or 4, wherein normalizing the natural-language text string comprises: identifying a text transcription of one or both of a date and time in the natural-language text string; and replacing the text transcription of the one or both of a date and time with a timestamp value representing the one or both of the date and time.

Embodiment 6: The method of any one of Embodiments 3 through 5, wherein normalizing the natural-language text string comprises: identifying a text transcription of a term, for an entity represented in the database, in the natural-language text string; and replacing the text transcription of the term with a standard term for the entity.

Embodiment 7: The method of any one of Embodiments 3 through 6, wherein the natural-language text string is received via an input of a graphical user interface, and wherein the method further comprises using the at least one hardware processor to: receive a result of executing the SQL query on the database; and display a representation of the result in the graphical user interface.

Embodiment 8: The method of any one of Embodiments 3 through 7, wherein the natural-language text string is received from an external system, and wherein the method further comprises using the at least one hardware processor to: receive a result of executing the SQL query on the database; and return a representation of the result to the external system.

Embodiment 9: The method of any preceding embodiment, wherein the natural-language query and the SQL query comprise a request for a value of at least one performance parameter of a network.

Embodiment 10: A system comprising: at least one hardware processor; and software configured to, when executed by the at least one hardware processor, perform the method of any one of Embodiments 1 through 9.

Embodiment 11: A non-transitory computer-readable medium having instructions stored thereon, wherein the instructions, when executed by a processor, cause the processor to perform the method of any one of Embodiments 1 through 9.

Embodiment 12: A method comprising using at least one hardware processor to: generate a representation of a database view for a database, wherein the database view maps native names for database elements in the database to semantic names for the database elements; and train a machine-learning text-to-SQL model to generate a Structured Query Language (SQL) query, comprising the semantic name for each database element referenced in the SQL query, from a natural-language text input representing a natural-language query, using a training dataset that comprises natural-language text inputs labeled with SQL queries.

Embodiment 13: The method of Embodiment 12, wherein the database elements comprise tables and columns within the tables.

Embodiment 14: The method of either Embodiment 12 or 13, further comprising using the at least one hardware processor to generate the training dataset by: obtaining an existing dataset that comprises natural-language text inputs labeled with existing SQL queries that comprise the native names for each database element referenced in the existing SQL queries; identifying the semantic names for the native names in the existing SQL queries; and replacing the native names in the existing SQL queries with the identified semantic names to produce modified SQL queries, wherein the training dataset comprises the natural-language text inputs, from the existing dataset, labeled with the modified SQL queries.

Embodiment 15. The method of Embodiment 14, further comprising using the at least one hardware processor to train an entity-extraction model to extract semantic names for database elements from natural-language questions, using another training dataset that comprises natural-language phrases labeled with semantic names.

Embodiment 16: The method of Embodiment 15, wherein generating the representation of the database view comprises: applying the trained entity-extraction model to the natural-language text inputs in the existing dataset to extract the semantic names for the database elements; and associating the extracted semantic names with corresponding ones of the native names in the existing SQL queries to produce the database view.

Embodiment 17: The method of any one of Embodiments 12 through 16, wherein one or more of the natural-language queries in the training dataset comprise a request for a value of at least one performance parameter of a network.

Embodiment 18: The method of any one of Embodiments 12 through 17, further comprising using the at least one hardware processor to: apply the representation of the database view to the database to add the database view to the database; and for each of one or more user-specified natural-language text inputs, apply the trained machine-learning text-to-SQL model to the user-specified natural-language text input to generate an SQL query, and execute the generated SQL query on the database using the database view.

Embodiment 19: The method of Embodiment 18, further comprising using the at least one hardware processor to, for each of the one or more user-specified natural-language text inputs: receive a result of executing the generated SQL query on the database; and return the result to a user system.

Embodiment 20: The method of either Embodiment 18 or 19, further comprising using the at least one hardware processor to, for each of the one or more user-specified natural-language text inputs: receive a user-specified natural-language text string; and normalize the natural-language text string to obtain the user-specified natural-language text input.

Embodiment 21: The method of Embodiment 20, wherein normalizing the natural-language text string comprises: identifying a text transcription for a particular item in the natural-language text string; and replacing the text transcription for the particular item with a standardized representation of the particular item.

Embodiment 22: A system comprising: at least one hardware processor; and software configured to, when executed by the at least one hardware processor, perform the method of any one of Embodiments 12 through 21.

Embodiment 23: A non-transitory computer-readable medium having instructions stored thereon, wherein the instructions, when executed by a processor, cause the processor to perform the method of any one of Embodiments 12 through 21.

The above description of the disclosed embodiments is provided to enable any person skilled in the art to make or use the invention. Various modifications to these embodiments will be readily apparent to those skilled in the art, and the general principles described herein can be applied to other embodiments without departing from the spirit or scope of the invention. Thus, it is to be understood that the description and drawings presented herein represent a presently preferred embodiment of the invention and are therefore representative of the subject matter which is broadly contemplated by the present invention. It is further understood that the scope of the present invention fully encompasses other embodiments that may become obvious to those skilled in the art and that the scope of the present invention is accordingly not limited.

Combinations, described herein, such as "at least one of A, B, or C," "one or more of A, B, or C," "at least one of A, B, and C," "one or more of A, B, and C," and "A, B, C, or any combination thereof' include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof' may be A only, B only, C only, A and B, A and C, B and C, or A and B and C, and any such combination may contain one or more members of its constituents A, B, and/or C. For example, a combination of A and B may comprise one A and multiple B's, multiple A's and one B, or multiple A's and multiple B's.

## Claims

1. A method comprising using at least one hardware processor to:
add a database view to a database, wherein the database view maps native names for database elements in the database to semantic names for the database elements;
obtain a natural-language text input representing a natural-language query;
apply a machine-learning text-to-SQL model to the natural-language text input to generate a Structured Query Language (SQL) query that comprises the semantic name for each database element referenced in the SQL query; and
execute the SQL query on the database, using the database view to map the semantic name for each database element referenced in the SQL query to the native name for that database element.

2. The method of Claim 1, wherein the database elements comprise tables and columns within the tables.

3. The method of Claim 1, further comprising using the at least one hardware processor to:
receive a natural-language text string; and
normalize the natural-language text string to obtain the natural-language text input.

4. The method of Claim 3, wherein normalizing the natural-language text string comprises:
identifying a text transcription of a network address in the natural-language text string; and
replacing the text transcription of the network address with a representation of the network address in a standard format.

5. The method of Claim 3, wherein normalizing the natural-language text string comprises:
identifying a text transcription of one or both of a date and time in the natural-language text string; and
replacing the text transcription of the one or both of a date and time with a timestamp value representing the one or both of the date and time.

6. The method of Claim 3, wherein normalizing the natural-language text string comprises:
identifying a text transcription of a term, for an entity represented in the database, in the natural-language text string; and
replacing the text transcription of the term with a standard term for the entity.

7. The method of Claim 3, wherein the natural-language text string is received via an input of a graphical user interface, and wherein the method further comprises using the at least one hardware processor to:
receive a result of executing the SQL query on the database; and
display a representation of the result in the graphical user interface.

8. The method of Claim 3, wherein the natural-language text string is received from an external system, and wherein the method further comprises using the at least one hardware processor to:
receive a result of executing the SQL query on the database; and
return a representation of the result to the external system.

9. The method of Claim 1, wherein the natural-language query and the SQL query comprise a request for a value of at least one performance parameter of a network.

10. A non-transitory computer-readable medium having instructions stored thereon, wherein the instructions, when executed by a processor, cause the processor to:
add a database view to a database, wherein the database view maps native names for database elements in the database to semantic names for the database elements;
obtain a natural-language text input representing a natural-language query;
apply a machine-learning text-to-SQL model to the natural-language text input to generate a Structured Query Language (SQL) query that comprises the semantic name for each database element referenced in the SQL query; and
execute the SQL query on the database, using the database view to map the semantic name for each database element referenced in the SQL query to the native name for that database element.

11. A method comprising using at least one hardware processor to:
generate a representation of a database view for a database, wherein the database view maps native names for database elements in the database to semantic names for the database elements; and
train a machine-learning text-to-SQL model to generate a Structured Query Language (SQL) query, comprising the semantic name for each database element referenced in the SQL query, from a natural-language text input representing a natural-language query, using a training dataset that comprises natural-language text inputs labeled with SQL queries.

12. The method of Claim 11, wherein the database elements comprise tables and columns within the tables.

13. The method of Claim 11, further comprising using the at least one hardware processor to generate the training dataset by:
obtaining an existing dataset that comprises natural-language text inputs labeled with existing SQL queries that comprise the native names for each database element referenced in the existing SQL queries;
identifying the semantic names for the native names in the existing SQL queries; and
replacing the native names in the existing SQL queries with the identified semantic names to produce modified SQL queries,
wherein the training dataset comprises the natural-language text inputs, from the existing dataset, labeled with the modified SQL queries.

14. The method of Claim 13, further comprising using the at least one hardware processor to train an entity-extraction model to extract semantic names for database elements from natural-language questions, using another training dataset that comprises natural-language phrases labeled with semantic names.

15. The method of Claim 14, wherein generating the representation of the database view comprises:
applying the trained entity-extraction model to the natural-language text inputs in the existing dataset to extract the semantic names for the database elements; and
associating the extracted semantic names with corresponding ones of the native names in the existing SQL queries to produce the database view.

16. The method of Claim 11, wherein one or more of the natural-language queries in the training dataset comprise a request for a value of at least one performance parameter of a network.

17. The method of Claim 11, further comprising using the at least one hardware processor to:
apply the representation of the database view to the database to add the database view to the database; and
for each of one or more user-specified natural-language text inputs,
apply the trained machine-learning text-to-SQL model to the user-specified natural-language text input to generate an SQL query, and
execute the generated SQL query on the database using the database view.

18. The method of Claim 17, further comprising using the at least one hardware processor to, for each of the one or more user-specified natural-language text inputs:
receive a result of executing the generated SQL query on the database; and
return the result to a user system.

19. The method of Claim 17, further comprising using the at least one hardware processor to, for each of the one or more user-specified natural-language text inputs:
receive a user-specified natural-language text string; and
normalize the natural-language text string to obtain the user-specified natural-language text input.

20. The method of Claim 19, wherein normalizing the natural-language text string comprises:
identifying a text transcription for a particular item in the natural-language text string; and
replacing the text transcription for the particular item with a standardized representation of the particular item.
